(19) Europäisches Patentamt / European Patent Office / Office européen des brevets

(11) **EP 4 431 534 A1**

(12) **EUROPEAN PATENT APPLICATION**
published in accordance with Art. 153(4) EPC

(43) Date of publication:
**18.09.2024 Bulletin 2024/38**

(21) Application number: **22890046.0**

(22) Date of filing: **07.11.2022**

(51) International Patent Classification (IPC):
**C08F 8/42** (2006.01)   **C08L 51/06** (2006.01)
**C09J 123/26** (2006.01)   **C09J 151/06** (2006.01)

(52) Cooperative Patent Classification (CPC):
**C08F 8/42; C08L 51/06; C09J 123/26; C09J 151/06**

(86) International application number:
**PCT/JP2022/041292**

(87) International publication number:
**WO 2023/080226 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2021 JP 2021182067**

(71) Applicant: **TOYOBO CO., LTD.**
**Osaka-shi, Osaka 530-0001 (JP)**

(72) Inventors:
• **YOSHINO, Kento**
  **Otsu-shi, Shiga 520-0292 (JP)**
• **SASAI, Tamayo**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) **CURABLE RESIN COMPOSITION**

(57) An object of the present invention is to provide a curable resin composition that has excellent adhesive strength and creep characteristics in a high-temperature environment. The object is achieved by providing a curable resin composition that contains a modified polyolefin A and a modified polyolefin B, wherein the modified polyolefin A is a resin in which a moisture-curable functional group is grafted onto a polyolefin a, the modified polyolefin B is a resin in which a moisture-curable functional group is grafted onto a polyolefin b, the polyolefin a has a softening point of 80°C or higher and lower than 120°C, the polyolefin b has a softening point of 120°C or higher and 170°C or lower, and the content ratio by mass of the modified polyolefin A and the modified polyolefin B is 50:50 to 95:5 in terms of the former:the latter.

EP 4 431 534 A1

**Description**

Technical Field

The present invention relates to a curable resin composition.

Background Art

Current hot-melt adhesives are solidified by cooling to thereby quickly develop adhesive strength. Because they do not contain solvents, these adhesives are used in a wide range of areas, including construction materials, automobile interiors, and sealing materials for electric materials. In particular, hot-melt adhesives containing olefin base resin have been used in a wide range of areas due to their high level of adhesive power to olefin substrates, which are materials that are not readily adhesive.

To improve the heat resistance of hot-melt adhesives, a base resin with a higher softening point or a higher molecular weight is used. The use of such a base resin improves adhesive strength and creep characteristics in a high-temperature environment. However, coating with a hot-melt adhesive requires high temperatures; in particular, if the adherend is an olefin, a high-temperature adhesive may cause the adherend to melt or deteriorate during the coating process. To solve this problem, PTL 1 discloses an invention that uses a solvent during coating; however, the solvent remains after drying in this invention.

To address the problem, PTL 2 reports a moisture-curable hot-melt adhesive that contains a silane-modified organic polymer. This silane-modified organic polymer exhibits excellent handling properties even during coating in a low-temperature environment, which does not affect substrates, and its heat resistance is thought to be improved by the crosslinked structure formed by the reaction of hydrolyzable silyl groups with moisture present in the air or in the adherend after the polymer is solidified by cooling.

Citation List

Patent Literature

PTL 1: JP2000-303047A
PTL 2: JP2010-059319A

Summary of Invention

Technical Problem

With a widening range of applications of olefin substrates from the viewpoints of low cost and low specific gravity, recent years have seen a trend toward demand for a higher level of heat resistance in hot-melt adhesives. However, the heat resistance achieved by the crosslinked structure formed from hydrolyzable silyl groups does not satisfy required performance.

An object of the present invention is to solve the problems of current hot-melt adhesives and moisture-curable hot-melt adhesives as described above. In other words, an object of the present invention is to provide a curable resin composition that is excellent in handling properties in a low-temperature molten state, which does not affect substrates, and that undergoes a rapid progress of curing reaction after solidification by cooling to thereby exhibit excellent adhesive strength and creep characteristics in a high-temperature environment.

Solution to Problem

After having conducted extensive research to solve the problems, the present inventors found that a curable resin composition that has the following characteristics has excellent handling properties in its low-temperature molten state, and adhesive strength and excellent creep characteristics in a high-temperature environment after a curing reaction, thereby completing the present invention. Specifically, the present invention broadly encompasses the inventions in the following embodiments.

Item 1 A curable resin composition, comprising

a modified polyolefin A and
a modified polyolefin B,

wherein

the modified polyolefin A is a resin in which a moisture-curable functional group is grafted onto a polyolefin a,
the modified polyolefin B is a resin in which a moisture-curable functional group is grafted onto a polyolefin b,
the polyolefin a has a softening point of 80°C or higher and lower than 120°C,
the polyolefin b has a softening point of 120°C or higher and 170°C or lower, and
the content ratio by mass of the modified polyolefin A and the modified polyolefin B is 50:50 to 95:5 in terms of the former:the latter.

Item 2 The curable resin composition according to Item 1, wherein the polyolefin a has a higher melt viscosity at 190°C than a melt viscosity at 190°C of the polyolefin b.
Item 3 The curable resin composition according to Item 1 or 2, wherein the polyolefin a has a melt viscosity at 190°C of 15000 mPa·s or lower.
Item 4 The curable resin composition according to any one of Items 1 to 3, which is for use in a hot-melt adhesive.
Item 5 A hot-melt adhesive comprising the curable resin composition of any one of Items 1 to 4.

Advantageous Effects of Invention

The curable resin composition of the present invention exhibits excellent handling properties in a low-temperature molten state, and excellent adhesive strength and excellent creep characteristics in a high-temperature environment after the curing reaction.

Brief Description of Drawings

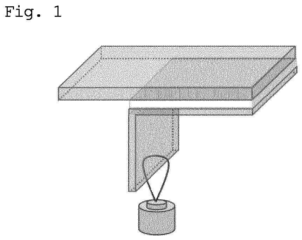

Fig. 1: Fig. 1 is a diagram illustrating an experiment to measure heat-resistant creep characteristics.

Description of Embodiments

The following describes the curable resin composition according to the embodiments of the present invention. The "to" in the phrase "A to B" indicating a numerical range below means "or more" and "or less" unless otherwise specified to mean "less than" or "more than." In other words, "A to B" means "A or more and B or less."
The curable resin composition of the present invention contains a modified polyolefin A and a modified polyolefin B.
The curable resin composition contains the modified polyolefin A and the modified polyolefin B in a ratio by mass of the former:the latter (the modified polyolefin A: the modified polyolefin B) of 50:50 to 95:5.
The modified polyolefin A is a polymer in which a moisture-curable functional group is grafted onto a polyolefin a.
The modified polyolefin B is a polymer in which a moisture-curable functional group is grafted onto a polyolefin b.
The polyolefin a has a softening point of 80°C or higher and lower than 120°C.
The polyolefin b has a softening point of 120°C or higher and 170°C or lower.

Polyolefins a and b

The monomer components constituting the polyolefin a and the polyolefin b are not particularly limited, to the extent that the effect of the invention is achieved. Examples include α olefins, such as ethylene, propylene, 1-butene, isobutene, 4-methyl-1-pentene, 1-hexene, 1-octene, 1-decene, 1-dodecene, 1-tetradecene, 1-hexadecene, 1-octadecene, and 1-eicosene.
The form of polymerization of the polyolefins is not particularly limited, to the extent that the effect of the present invention is achieved. Examples include homopolymers of α-olefins, such as propylene; copolymers of α-olefin other than ethylene with ethylene, such as ethylene-propylene copolymers, ethylene-propylene-butylene copolymers, and ethylene-propylene-isobutylene copolymers; and copolymers of α-olefin with other monomers copolymerizable with the α-olefin (e.g., conjugated and unconjugated dienes, such as butadiene, 1,4-hexadiene, 7-methyl-1,6-octadiene, 1,8-nonadiene, and 1,9-decadiene, and cyclic olefins, such as cyclopropene, cyclobutene, cyclopentene, norbornene, and dicyclopentadiene).
The crystalline form of the polyolefins is not particularly limited, to the extent that the effect of the present invention is achieved. For example, the polyolefins can be in various forms, such as crystalline polyolefin, amorphous polyolefin, or low-crystalline polyolefin. Of these forms, amorphous polyolefin or low-crystalline polyolefin is preferred. More specifically, polypropylene polymers, ethylene-propylene copolymers, ethylene-propylene-butylene copolymers, and ethylene-propylene-isobutylene copolymers are preferred.

The amorphous polyolefin or low-crystalline polyolefin indicates a crystallization energy (J/g) of 50 J/g or less as measured by differential scanning calorimetry. The crystallization energy is the endothermic value determined by heating a sample from 20°C to 230°C with a differential scanning calorimeter, then cooling the sample to -100°C, and further reheating the sample to 230°C at a rate of 10°C/min.

The polyolefin a has a softening point of 80 to lower than 120°C. Setting the softening point of the polyolefin a to 80°C or higher facilitates the curing reaction after solidification by cooling of the curable resin composition of the present invention or the hot-melt adhesive comprising the curable resin composition. Setting the softening point of the polyolefin a to lower than 120°C makes it easier to apply the curable resin composition of the present invention or the hot-melt adhesive comprising the curable resin composition to an adherend. From the viewpoint of achieving the effect of the invention to a greater extent, it is preferable to set the softening point of the polyolefin a to 80 to 100°C.

The polyolefin b has a softening point of 120 to 170°C. Setting the softening point of the polyolefin b to 120°C or higher allows the curing reaction after solidification by cooling of the curable resin composition of the present invention or the hot-melt adhesive comprising the curable resin composition to proceed faster, and improves room-temperature adhesive strength of the composition cured in a predetermined environment, and adhesive strength and creep characteristics in a high-temperature environment. A softening point of the polyolefin b of 170°C or lower also makes it easier to apply the curable resin composition of the present invention or the hot-melt adhesive comprising the curable resin composition to an adherend. From the viewpoint of achieving the effect of the invention to a greater extent, it is preferable to set the softening point of the polyolefin b to 140 to 160°C.

The softening points of the polyolefin a and the polyolefin b are the values measured in accordance with the testing methods for the softening point of hot-melt adhesives prescribed in JIS K 6863.

It is preferred that the melt viscosity at 190°C of the polyolefin a and the melt viscosity at 190°C of the polyolefin b satisfy the following relationship formula i.

The melt viscosity of polyolefin a > the melt viscosity of polyolefin b

In other words, the melt viscosity at 190°C of the polyolefin a is preferably higher than the melt viscosity at 190°C of the polyolefin b.

If the melt viscosity at 190°C of the polyolefin a and the melt viscosity at 190°C of the polyolefin b satisfy the relationship formula i, it further becomes easier to apply the curable resin composition of the present invention or the hot-melt adhesive comprising the curable resin composition to an adherend.

The melt viscosity at 190°C of the polyolefin a is preferably 15000 mPa·s or lower, more preferably 14000 mPa·s or lower, and most preferably 12000 mPa·s or lower.

If the melt viscosity at 190°C of the polyolefin a is 15000 mPa·s or lower, it further becomes easier to apply the curable resin composition of the present invention or the hot-melt adhesive comprising the curable resin composition to an adherend. The melt viscosity at 190°C of a polyolefin refers to the value measured in accordance with the testing methods for melt viscosity of hot-melt adhesives prescribed in JIS K 6862.

The polyolefin a and polyolefin b are not particularly limited as long as the polyolefin a and polyolefin b satisfy conditions such as the softening point and the melt viscosity, and as long as the effect of the present invention is achieved. The polyolefin a for use may be a single polyolefin a or a combination of two or more polyolefins a in any ratio. The polyolefin b for use may also be a single polyolefin b or a combination of two or more polyolefins b in any ratio.

From the viewpoint of achieving an effect of the present invention to a greater extent, it is preferable to use a combination of two or more polyolefins a.

The production method for the polyolefin a and polyolefin b is not particularly limited, to the extent that the effect of the present invention is achieved. Any known method can be used. For example, the polyolefin a and polyolefin b can be produced according to liquid polymerization, slurry polymerization, bulk polymerization, or polymerization by vapor-phase reaction. The conditions of each polymerization reaction can be set as appropriate, for example, according to the state of the catalyst containing a zirconium compound etc. to be used (e.g., homogeneous or heterogeneous (supported form)), the production method (e.g., solution polymerization, slurry polymerization, or vapor-phase polymerization), the physical properties of the target polymer, or the form of the polymer.

If the polymerization reaction is performed in a liquid or slurry form, the solvent or olefin itself (starting material) can be used as a medium. Such solvents are not particularly limited. Examples include aliphatic or alicyclic hydrocarbons, aromatic hydrocarbons, and halogenated hydrocarbons. Such aliphatic or alicyclic hydrocarbons specifically include propane, butane, isobutane, pentane, hexane, octane, decane, dodecane, cyclopentane, methylcyclopentane, and cyclohexane. Specifically, aromatic hydrocarbons include benzene, toluene, and xylene. Specifically, the halogenated hydrocarbons include dichloromethane, chloroethane, 1,2-dichloroethane, and chlorobenzene. These solvents may be used alone or in a combination of two or more in any ratio. To increase the productivity of the polyolefin a and polyolefin b, an impurity remover may be added to the reaction system. Such an impurity remover is not particularly limited, to the extent that a desired effect is achieved. For example, triethylaluminum may be listed.

The amount of a catalyst used in the polymerization reaction of the polyolefin a and polyolefin b is not particularly limited, to the extent that the effect of the catalyst is achieved. For example, the catalyst can be used in such an amount that the central metal concentration of the catalyst results in about $10^{-8}$ to 10 mol/L in the reaction system used for polymerization. From the viewpoint of achieving a greater effect of the present invention, it is preferable to use the catalyst in such an amount that the central metal concentration of the catalyst results in about $10^{-7}$ to $10^{-2}$ mol/L.

The temperature of the polyolefin a and polyolefin b in the polymerization reaction cannot be generalized because the temperature depends on the reactants, reaction conditions, etc. In solution polymerization, the polymerization temperature may be about 0 to 250°C, and is preferably about 10 to 200°C. If slurry or vapor-phase polymerization is performed, the temperature can usually be about 0 to 120°C, and is preferably 20 to 110°C. The pressure in the polymerization reaction can usually be ambient pressure to about 20 MPa, and is preferably ambient pressure to about 10 MPa.

The polymerization reaction of the polyolefin a and polyolefin b may be performed in a batch, semi-continuous, or continuous mode. The molecular weight and molecular weight distribution of the final polymer produced according to such a polymerization method can be adjusted, for example, by a method of adjusting the polymerization temperature or injecting hydrogen into the reactor.

In the present invention, the polyolefin a and polyolefin b are preferably produced by polymerizing a single or two or more olefin monomers in the presence of a metallocene catalyst. An activator and/or scavenger (capture agent) may be added in performing polymerization. The olefin monomers suitably used include α-olefins, such as ethylene, propylene, 1-butene, isobutene, 4-methyl-1-pentene, 1-hexene, 1-octene, 1-decene, 1-dodecene, 1-tetradecene, 1-hexadecene, 1-octadecene, and 1-eicosene; conjugated or unconjugated dienes, such as butadiene, 1,4-hexadiene, 7-methyl-1,6-octadiene, 1,8-nonadiene, and 1,9-decadiene; and cyclic olefins, such as cyclopropene, cyclobutene, cyclopentene, cyclohexene, norbornene, and dicyclopentadiene.

Examples of metallocene catalysts include bis(cyclopentadienyl)zirconium dichloride, bis(methylcyclopentadienyl)zirconium dichloride, bis(ethylcyclopentadienyl)zirconium dichloride, bis(iso-propylcyclopentadienyl)zirconium dichloride, bis(n-propylcyclopentadienyl)zirconium dichloride, bis(n-butylcyclopentadienyl)zirconium dichloride, bis(t-butylcyclopentadienyl) zirconium dichloride, bis(thexylcyclopentadienyl)zirconium dichloride, bis(trimethylsilylcyclopentadienyl)zirconium dichloride, bis(trimethylsilylmethylcyclopentadienyl)zirconium dichloride, bis(cyclopentadienyl)zirconium chlorohydride, bis(cyclopentadienyl) methyl zirconium chloride, bis(cyclopentadienyl) ethyl zirconium chloride, bis(cyclopentadienyl) methoxy zirconium chloride, bis(cyclopentadienyl) phenyl zirconium chloride, bis(cyclopentadienyl) dimethyl zirconium, bis(cyclopentadienyl) diphenyl zirconium, bis(cyclopentadienyl) dineopentyl zirconium, bis(cyclopentadienyl) dihydrozirconium, bis(cyclopentadienyl) dimethoxyzirconium, bis(cyclopentadienyl)zirconium dichloride, trichloro(indenyl) titanium(IV), trichloro(cyclopentadienyl) titanium(IV), bis(cyclopentadienyl) zirconium chloride hydride, hafnocene dichloride, bis(butylcyclopentadienyl) zirconium(IV) dichloride, bis(propylcyclopentadienyl) hafnium(IV) dichloride, trichloro(pentamethylcyclopentadienyl) titanium(IV), μ-chlorobis ($\eta^5$-cyclopentadienyl) (dimethylaluminum) -μ-methylene titanium, bis(pentamethylcyclopentadienyl) zirconium(IV) dichloride, bis(cyclopentadienyl) titanium dichloride, and bis(cyclopentadienyl) dimethyl titanium. Of these metallocene catalysts, bis(t-butylcyclopentadienyl)zirconium dichloride is preferred in the present invention. These metallocene catalysts may be used alone or in a combination of two or more.

Curable Resin: Modified Polyolefins A and B Grafted with Moisture-curable Functional Group

The following describes modified polyolefins A and B grafted with a moisture-curable functional group contained in the curable resin composition.

The melt viscosity at 140°C of the modified polyolefin A and modified polyolefin B is not particularly limited. For example, the melt viscosity is preferably about 50000 mPa.s or lower, more preferably about 40000 mPa·s or lower, and most preferably about 35000 mPa·s or lower. A melt viscosity at 140°C of the modified polyolefins A and B being about 50000 mPa·s or lower further makes it easier to apply the curable resin composition or the hot-melt adhesive comprising the curable resin composition to an adherend. The melt viscosity at 140°C of the modified polyolefins A and B refers to a value measured in accordance with the testing methods for melt viscosity of hot-melt adhesives prescribed in JIS K 6862.

When an extraction operation has been performed on the modified polyolefins A and B with acetone, the low-molecular-weight component is preferably 2.5 wt% or lower. A low-molecular-weight component in an amount of 2.5 wt% or lower further improves adhesive strength and creep characteristics in a room-temperature environment or a high-temperature environment of the curable resin composition or the hot-melt adhesive comprising the curable resin composition cured in a predetermined environment.

The following describes the acetone extraction method performed for the modified polyolefins A and B. An extraction operation using a Soxhlet extractor is performed on the modified polyolefin A or B that has been powdered by cryogenic grinding, crystallization, or any means. Acetone is used as an extraction solvent.

The modified polyolefins A and B preferably have a softening point of about 70 to 180°C, more preferably about 80 to 170°C, and particularly preferably about 90 to 160°C. A softening point of the modified polyolefin A being about 70°C or higher is preferred because it can further facilitate the curing reaction after solidification by cooling of the curable resin composition or the hot-melt adhesive comprising the curable resin composition. A softening point of the modified polyolefin A being about 180°C or lower makes it easier to perform a coating operation with the curable resin composition or the hot-melt adhesive comprising the curable resin composition. The softening point of the modified polyolefins A and B refers to the value measured in accordance with the testing methods for the softening point of hot-melt adhesives prescribed in JIS K 6863.

The storage elastic modulus at 100°C after the modified polyolefins A and B have been cured is preferably, but is not particularly limited to, $10^4$ to $10^6$ Pa. A storage elastic modulus of $10^4$ to $10^6$ Pa improves thermal creep resistance after curing and room-temperature peel strength after curing. The storage elastic modulus of the modified polyolefins A and B was determined from dynamic viscoelasticity measurements performed using a DVA-200 dynamic viscoelastic analyzer (*IT Keisoku Seigyo K.K.*).

Dynamic viscoelasticity was measured under the following conditions.

- Temperature: -100 to 150°C (4°C/min.)
- Frequency: 10 Hz

The production method for the modified polyolefins A and B is not particularly limited as long as the effect of the present invention is achieved. Any known method can be used. For example, the modified polyolefin A or B can be produced by grafting a compound containing a moisture-curable functional group and an ethylenically unsaturated bond onto the polyolefin a or b in the presence of an initiator, such as a radical initiator, or by electron beam radiation.

The radical initiator is not particularly limited. Examples include peroxide initiators and azo initiators. Peroxide initiators for use can be selected from a wide range of known peroxide initiators. Examples include dicumyl peroxide, di-t-butyl peroxide, t-butyl peroxyisopropyl carbonate, t-butyl perbenzoate, benzoyl peroxide, cumene hydroperoxide, t-butyl peroctoate, methyl ethyl ketone peroxide, 2,5-dimethyl-2,5-di(t-butylperoxy)hexane, lauryl peroxide, t-butyl peracetate, t-butyl α-cumyl peroxide, di-t-butyl peroxide, di-t-amyl peroxide, t-amyl peroxybenzoate, 1,1-bis(t-butylperoxy)-3,3,5-trimethylcyclohexane, α,α'-bis(t-butylperoxy)-1,3-diisopropylbenzene, α,α'-bis(t-butylperoxy)-1,4-diisopropylbenzene, 2,5-bis(t-butylperoxy)-2,5-dimethylhexane, and 2,5-bis(t-butylperoxy)-2,5-dimethyl-3-hexyne. Azo initiators for use can be selected from a wide range of known azo initiators. Examples include azobisisobutyl nitrite and azobisisobutyronitrile (AIBN). These radical initiators may be used alone or in a combination of two or more.

The moisture-curable functional group of the compound containing a moisture-curable functional group and an ethylenically unsaturated bond used in synthesizing the modified polyolefins A and B may be an isocyanate group or a hydrolyzable silyl group. From the viewpoint of reactivity control, silane-modified monomers can be suitably used as a compound containing a hydrolyzable silyl group and an ethylenically unsaturated group.

A specific example of such silane-modified monomers is a compound represented by the following formula:

$$(X)_n(R)_{3-n}\text{-Si-Y}$$

(In the formula, Y is an ethylenically unsaturated group, X is a hydrolyzable group, R is an alkyl group, and n represents an integer of 1 to 3.)

The hydrolyzable group is not particularly limited. Examples include a halogenated group, an alkoxy group, an alkenyloxy group, an acyloxy group, an amino group, an aminooxy group, an oxime group, and an amide group. The number of hydrolyzable groups bound to one silicon atom is selected from the range of 1 to 3. The hydrolyzable groups bound to one silicon atom may be of one type, or of two or more types. Furthermore, a hydrolyzable group and a non-hydrolyzable group may be bound to one silicon atom. Alkoxysilyl groups (including monoalkoxysilyl, dialkoxysilyl, and trialkoxysilyl groups) are particularly preferred as silicon groups bonded to the hydrolyzable groups because of the ease of handling.

The ethylenically unsaturated group is not particularly limited. Examples include a vinyl group, an allyl group, an isopropenyl group, a butenyl group, and a cyclohexenyl group. Other examples include unsaturated silanes containing both a γ-(meth)acryloxyallyl group and a hydrolyzable group such as a hydrocarbyloxy group, hydrocarbonyloxy group, or hydrocarbylamino group. The silane-modified monomers may be used alone or in a combination of two or more.

The amount of the radical initiator used in the production of the modified polyolefins A and B is not particularly limited. For example, the amount of the radical initiator is preferably about 0.5 to 10 parts by mass, more preferably about 0.75 to 8 parts by mass, and particularly preferably about 1 to 5 parts by mass, per 100 parts by mass of the polyolefin a or b. The use of the radical initiator in an amount of about 0.5 parts by mass or more allows a grafting reaction to proceed sufficiently and further improves adhesive strength and creep characteristics in a room-temperature environment or a high-temperature environment of the curable resin composition or the hot-melt adhesive comprising the curable resin composition cured in a predetermined environment. The use of the radical initiator in an amount of about 10 parts by mass or less reduces side reactions such as homopolymerization of the silane-modified monomer or decomposition reaction of the polyolefin a or b.

The ratio by mass of the radical initiator to the silane-modified monomer is not particularly limited, to the extent that the effect of the present invention is achieved. For example, the radical initiator:the silane-modified monomer is preferably 1:0.2 to 1:10, the radical initiator:the silane-modified monomer is more preferably 1:0.4 to 1:5, and the radical initiator:the silane-modified monomer is particularly preferably 1:0.6 to 1:2.5. Setting the ratio by mass represented by the radical initiator:the silane-modified monomer to 1:0.2 to 1:10 reduces side reactions such as homopolymerization of the silane-modified monomer or decomposition reaction of the polyolefin a or b and further improves adhesive strength and creep characteristics in a room-temperature environment or a high-temperature environment of the curable resin composition or the hot-melt adhesive comprising the curable resin composition cured in a predetermined environment.

In the production of the modified polyolefins A and B, a compound having a stable nitroxy radical in its molecule can optionally be used. Such a compound containing a nitroxy radical is not particularly limited as long as the effect of the present invention can be achieved, and as long as the compound contains a stable nitroxy radical. Examples include 2,2,6,6-tetramethylpiperidine1-oxyl (TEMPO), N-tert-butyl-N-[a-diethlphosphono-(2,2-dimethylpropyl)]nitoroxide (DEPN), 2,2,d-trimethyl-4-phenyl-3-azahexane-3-nitroxide (TIPNO), N-tert-butyl-N-(1-tert-butyl-2-ethylsulfinyl)propyl nitroxide (BESN), and 2,2,10,10-tetraethylisoindolin-N-oxyl (TEDIO). Derivatives of these compounds can also be used. These compounds containing a stable nitroxy radical or derivatives thereof may be used alone or in a combination of two or more.

The molar ratio of the nitroxy radical (I) contained in such a compound to the radical (II) generated from the radical initiator as described above is not particularly limited, to the extent that the effect of the invention is achieved. For example, I:II is preferably about 1:0.001 to 1:1, and I:II is more preferably about 1:0.01 to 1:0.1. A molar ratio of I:II being 1:0.001 to 1:1 can reduce the decomposition of the modified polyolefins A and B due to radicals generated from the radical initiator and efficiently graft the moisture-curable functional group onto the main chain skeleton of the olefin.

The grafting reaction can be performed in a melt, solution, or solid state, a swollen state, etc. The grafting reaction for the main skeleton of the polyolefin a or b by using a silane-modified monomer can be performed with equipment selected from a wide range, such as a twin-screw extruder, a single-screw extruder, a Brabender, or a batch reactor (however, the equipment is not particularly limited to these).

The ratio by mass of the modified polyolefin A and the modified polyolefin B contained in the curable resin composition of the present invention is the following: modified polyolefin A:modified polyolefin B = 50:50 to 95:5. Setting the ratio in this manner not only allows the modified polyolefin A and the modified polyolefin B to exhibit a predetermined melt viscosity for a long period of time, but also makes it easier to apply the curable resin composition of the present invention or the hot-melt adhesive comprising the curable resin composition to an adherend. Additionally, setting the ratio in this manner also improves adhesive strength and creep characteristics in a room-temperature environment or a high-temperature environment of the curable resin composition of the present invention or the hot-melt adhesive comprising the curable resin composition cured in a predetermined environment.

From the viewpoint of achieving the effect of the invention to a greater extent, the ratio by mass of the modified polyolefin A:the modified polyolefin B is preferably 60:40 to 90:10, and the ratio by mass of the modified polyolefin A:the modified polyolefin B is more preferably 65:35 to 85:15.

Hansen Solubility Parameters: HSP

The Hansen solubility parameters (HSP) refer to parameters in vector quantity determined by dividing the Hildebrand solubility parameter into the following three cohesive energy components: London dispersion force, dipole force, and hydrogen bonding force. In the present invention, the component corresponding to the London dispersion force in the HSP is described as "dispersion term" (also "5d"), the component corresponding to the dipole force is described as "polarity term" (also "$\delta p$"), and the component corresponding to the hydrogen bonding force is described as "hydrogen bonding term" (also "$\delta h$"). Since HSP is a vector quantity, it is known that few pure substances have exactly the same values. A database has also been constructed for the HSP of commonly used substances. Thus, a person skilled in the art can obtain the HSP values of a desired substance by referring to the database. Even for a substance with its HSP values not registered in the database, a person skilled in the art can calculate the HSP values from its chemical structure by using computer software such as Hansen Solubility Parameters in Practice (HSPiP). Alternatively, HSP values of a substance whose HSP values are not registered can be determined by conducting dissolution tests by using multiple solvents whose HSP values are known and inputting the obtained solubility into HSPiP. In the case of a mixture of multiple substances, the HSP values of the mixture are calculated as the sum of the values determined by multiplying the HSP values of each substance (a component of the mixture) by the volume ratio of the substance to the entire mixture. For HSP values, refer to, for example, Hiroshi Yamamoto, S. Abbott, C. M. Hansen, Chemical Industry, March 2010. For HSP, refer to, for example, Hiroshi Yamamoto, S. Abbott, C. M. Hansen, Chemical Industry, April 2010.

The HSP values and interaction radius $R_0$ in the present specification were determined according to the dissolution test methods described in Hiroshi Yamamoto, S. Abbott, C. M. Hansen, Chemical Industry, March 2010, and Hiroshi Yamamoto, S. Abbott, C. M. Hansen, Chemical Industry, April 2010.

The Hansen solubility parameters of the modified polyolefin A and modified polyolefin B are values that vary with the monomer structure, molecular weight, molecular weight distribution, and crystallinity of each modified polyolefin.

The interaction radius $R_0$ indicates the distance from the center coordinates within which the modified polyolefin A shows solubility, when the coordinates of the solubility parameters (HSP) of the modified polyolefin A in the Hansen space are defined as the center coordinates. The interaction radius $R_0$ can be typically determined by conducting a dissolution test in which the modified polyolefin A is dissolved in various solvents whose HSP is established. Specifically, the coordinates of the Hansen solubility parameters of all solvents used in the dissolution test are plotted in the Hansen space, and a sphere (dissolving sphere) that satisfies the following is searched: the coordinates of the solvents that dissolved the modified polyolefin A come inside the sphere, with the coordinates of the solvents that did not dissolve the modified polyolefin A being present outside the sphere. Then, the radius of the dissolving sphere is determined to be the interaction radius $R_0$ of the modified polyolefin A.

The distance $R_{a-b}$ between the Hansen solubility parameters of the modified polyolefin A and the Hansen solubility parameters of the modified polyolefin B can be determined according to the following formula (i). Note that $\delta d_1$, $\delta p_1$, and $\delta h_1$ respectively denote the dispersion term, polarity term, and hydrogen bonding term of the Hansen solubility parameters of the modified polyolefin A. $\delta d_2$, $\delta p_2$, and $\delta h_2$ respectively denote the dispersion term, polarity term, and hydrogen bonding term of the Hansen solubility parameters of the modified polyolefin B.

$$R_{a-b}{}^2 = 4 \; (\delta d_2 - \delta d_1)^2 + (\delta p_2 - \delta p_1)^2 + (\delta h_2 - \delta h_1)^2 \cdots \text{i}$$

The relative energy difference (RED) is represented by the following formula:

$$Relative \; Energy \; Difference \; (RED) \; = \frac{R_{a-b}}{R_0} \cdots \text{i i}$$

(In the formula, $R_0$ represents the interaction radius of the modified polyolefin A and $R_{a-b}$ represents the distance between the Hansen solubility parameters (HSP) of the modified polyolefin A and the Hansen solubility parameters (HSP) of the modified polyolefin B.)

The relative energy difference (RED) is an indicator of affinity for a target substance. The RED calculated from the HSP values of the modified polyolefins A and B and the interaction radius R0 of the modified polyolefin A described above is preferably 1 or less. An RED of 1 or less allows the modified polyolefins A and B to be easily compatible to each other to enable the preparation of a homogeneous curable resin composition grafted with a moisture-curable functional group. From the viewpoint of achieving the effect of the invention to a greater extent, the RED of 1 or less is preferably set to 0.8 or less, more preferably to 0.6 or less, still more preferably to 0.4 or less, and most preferably to 0.2 or less.

Moisture-curable Catalyst

The curable resin composition of the present invention may contain a moisture-curable catalyst. The moisture-curable catalyst is not particularly limited, as long as the moisture-curable catalyst can accelerate the dehydration condensation reaction of the hydrolyzable silyl groups of the modified polyolefin A or B. Examples include organic bases, organic acids, and carboxylic organometallic compounds (including organotitanates and complexes, or carboxylates of lead, cobalt, iron, nickel, zinc, tin, etc.). Examples of organic bases include tertiary amines. Examples of organometals include dibutyltin dilaurate, dioctyltin maleate, dibutyltin diacetate, dibutyltin dioctate, stannous acetate, stannous octanoate, lead naphthenate, zinc caprylate, and cobalt naphthenate. The moisture-curable catalyst may be used alone or in combination of two or more.

The content of the moisture-curable catalyst in the curable resin composition of the present invention can usually be about 0.0001 to 2.0 parts by mass, preferably about 0.0005 to 1.0 parts by mass, and particularly preferably about 0.001 to 0.5 parts by mass, per 100 parts by mass of the curable resin composition.

Setting the content of the moisture-curable catalyst to about 0.0001 to 2.0 parts by mass per 100 parts by mass of the curable resin composition makes it easier to apply the curable resin composition or the hot-melt adhesive comprising the curable resin composition to an adherend.

Diluent

The curable resin composition of the present invention may further contain one or more diluents. The diluent is generally used to decrease the viscosity of the curable resin composition. Such a diluent can usually be used in an amount of less than about 50 parts by mass, preferably less than about 40 parts by mass, and more preferably less than about 35 parts by mass, per 100 parts by mass of the curable resin composition of the present invention. Specifically, such diluents include, but are not limited to, white mineral oil (e.g., Kaydol (registered trademark) oil available from Witco Corporation), Shellflex (registered trademark) 371 naphthenic oil (available from Shell Oil Company), and Calsol 5550 (naphthenic oil from Calumet Lubricants).

Tackifier

The curable resin composition of the present invention may contain one or more tackifiers. The content of the tackifier is not particularly limited. Specifically, the tackifier can usually be used in an amount of less than about 50 parts by mass, preferably less than about 40 parts by mass, and more preferably less than about 35 parts by mass, per 100 parts by mass of the curable resin composition of the present invention. Examples of such tackifying resins include, but are not limited to, aliphatic, alicyclic, or aromatic hydrocarbons, modified hydrocarbons, and hydrogenated versions thereof; terpenes, modified terpenes, and hydrogenated versions thereof; rosins, rosin derivatives, and hydrogenated versions thereof; and mixtures of these. Useful examples include Eastotac (registered trademark) H-100, H-115, H130, and H142, which are partially hydrogenated alicyclic petroleum hydrocarbon resins from Eastman Chemical Company. Other useful tackifying resins include Escorez (registered trademark) 5300, 5637, and 5400, partially hydrogenated alicyclic petroleum hydrocarbon resins, Escorez (registered trademark) 5600, and partially hydrogenated aromatic modified petroleum hydrocarbon resins from ExxonMobil Chemical Co. Other tackifying resins include Wingtack (registered trademark) Extra, which is an aliphatic, aromatic petroleum hydrocarbon resin available from Goodyear Chemical Co.; Hercolite (registered trademark) 2100, partially hydrogenated alicyclic petroleum hydrocarbon resins; and Zonatac (registered trademark) 105 and 501 Lite, which are styrenated terpene resins produced from d-limonene and available from Arizona Chemical Co. in Panama City, Florida.

Wax

The curable resin composition of the present invention may contain at least one type of wax. The content of the wax is not particularly limited. Specifically, such wax can usually be used in an amount of less than about 30 parts by mass, preferably less than about 20 parts by mass, and more preferably less than about 15 parts by mass, per 100 parts by mass of the curable resin composition of the present invention. The wax to be contained in the resin composition of the invention is not particularly limited. Examples include paraffinic wax, microcrystalline wax, high-density, low-molecular-weight polyethylene wax, pyrolytic wax, byproduct polyethylene wax, Fischer-Tropsch wax, oxidized Fischer-Tropsch wax, and functionalized wax (e.g., hydroxystearamide wax and fatty amide wax). These can be suitably combined. It is common in the art to use the technical term "synthetic high-melting-point wax," encompassing high-density, low-molecular-weight polyethylene wax, byproduct polyethylene wax, and Fischer-Tropsch wax among the types of wax mentioned above.

Antioxidant

An antioxidant (stabilizer) may be added to protect an adhesive from degradation due to a reaction with oxygen, induced by things like heat, light, or a residual catalyst from starting materials.
Such antioxidants include Irganox (registered trademark) 565, 1010, and 1076, which are hindered phenolic antioxidants commercially available from Ciba-Geigy in Hawthorne, New York. These antioxidants are primary antioxidants that act as a free radical scavenger and can be used alone. These antioxidants can also be used in combination with another antioxidant (e.g., a phosphite antioxidant such as Irgafos (registered trademark) 168, available from Ciba-Geigy). Phosphite antioxidants are considered to be secondary antioxidants, which are typically not used alone, and are used mainly as a peroxide decomposer. Such other antioxidants are not particularly limited, to the extent that the effect of the invention is achieved. Examples include Cyanox (registered trademark) LTDP, available from Cytec Industries in Stamford (Connecticut), and Ethanox (registered trademark) 1330, available from Albemarle Corp. in Baton Rouge (Louisiana). These other antioxidants may be used alone or in combination with the primary antioxidants described above.
The amount of the antioxidant used in the curable resin composition of the present invention may usually be less than 0.5 parts by mass, and preferably less than 0.2 parts by mass, per 100 parts by mass of the curable resin composition.

In the present specification, the expression "comprising" an ingredient or "containing" an ingredient includes not only the meaning that the ingredient is contained with optional other ingredients, but also the concepts of consisting of, which means containing only the ingredient, and consisting essentially of, which means containing the ingredient as an essential ingredient.

The disclosures of the literature and web pages listed in the present specification are incorporated by reference into the specification.

The various characteristics such as properties, structures, and functions described in each embodiment of the present invention above can be combined as appropriate in specifying the embodiments encompassed by the invention. Specifically, the present invention encompasses all the inventions of the embodiments achieved by any possible combination of the characteristics disclosed in the specification.

Examples

The following specifically describes the present invention with reference to Examples. However, the invention is not limited to the Examples. The measurement of each item was in accordance with the methods below.

1) Measurement of Melt Viscosity

Measurement was performed according to the method described in the present specification.

2) Measurement of Softening Point

Measurement was performed according to the method described in the present specification.

3) Evaluation of Handling Properties

3-1: Evaluation of Handling and Coating Properties

The melt viscosity of the various curable resin compositions described below was measured according to the method described in the present specification. A curable resin composition with a melt viscosity at 140°C of 30000 mPa·s or less was rated "A." A curable resin composition with a melt viscosity at 140°C of 50000 mPa·s or less was rated "B." A curable resin composition with a melt viscosity at 140°C of 50001 mPa·s or more was rated "C."

3-2: Evaluation of Handling Properties and Viscosity Stability

A predetermined amount of the produced curable resin composition was fractionated, and melt viscosity 1 (mPa·s) at 140°C of the curable resin composition was measured in accordance with the testing methods for melt viscosity of hot-melt adhesives prescribed in JIS K 6862. A predetermined amount of the produced curable resin composition was added to a flask equipped with a reflux tube and stirred at 140°C at 120 rpm for one hour. A predetermined amount of the stirred curable resin composition was fractionated, and melt viscosity 2 at 140°C of the curable resin composition was measured in accordance with the testing methods for melt viscosity of hot-melt adhesives prescribed in JIS K 6862. In regards to melt viscosity 1 and melt viscosity 2, the curable resin compositions were rated "A" if (melt viscosity 2 - melt viscosity 1) ≤ 1500 mPa·s, "B" if 1500 mPa·s < (melt viscosity 2 - melt viscosity 1) ≤ 2000 mPa·s, and "C" if 2000 mPa·s < (melt viscosity 2 - melt viscosity 1).

4) Measurement of Adhesive Strength

After the various curable resin compositions described below were brought into a molten state by a predetermined temperature above their softening point, 0.005 parts by mass of Neostann U-100 (dibutyltin dilaurate; Nitto Kasei Co., Ltd.) as a curing catalyst was added, per 100 parts by mass of the modified polyolefin described below, and the mixture was stirred. After the curing catalyst was added, films were formed by applying a pressure of 10 MPa for 30 seconds at 140°C by using a 200-pm spacer. The samples in a film form were cut to a piece of 25 mm wide and 300 mm long.

The cut-out samples were individually placed between adherend 1 and adherend 2 and subjected to application of a pressure of 1 MPa for 10 seconds at 140°C by using a 100-μm spacer, thereby preparing adhered samples.

The prepared adhered samples were cured with warm water at 60°C for 7 days and then aged for 1 day at 23°C and 50% RH to obtain samples for measurement. The samples for measurement were measured for 180-degree peel adhesive strength at a peel rate of 300 mm/min at a predetermined temperature to determine adhesive strength. A sample with an adhesive strength of 3.0 N/25 mm or more or a broken sample was rated A, and a sample with an adhesive strength of less than 3.0 N/25 mm was rated B. An SA-302 table type test press from Tester Sangyo Co., Ltd. was used for film formation and adhesion.

Adherend 1: PP board (thickness: 2 mm)
Adherend 2: CPP film (thickness: 80 μm)

5) Measurement of Heat-resistant Creep Characteristics

After the curable resin compositions were brought into a molten state by a predetermined temperature, 0.005 parts by mass of Neostann U-100 (dibutyltin dilaurate; Nitto Kasei Co., Ltd.) as a curing catalyst was added per 100 parts by mass of a modified polyolefin, and the mixture was stirred. After the curing catalyst was added, films were formed by applying a pressure of 10 MPa for 30 seconds at 140°C by using a 200-pm spacer. The samples in a film form were cut to a piece 25 mm wide and 25 mm long.

As shown in Fig. 1, the cut-out samples (2) were individually placed together with a 100-pm spacer between adherend 1 (1) and adherend 2 (3) and subjected to application of a pressure of 1 MPa for 10 seconds at 140°C to prepare adhered samples. The prepared adhered samples were cured with warm water at 60°C for 7 days and then aged for 1 day at 23°C and 50% RH, thereby obtaining samples for measurement.

A weight (4) was placed such that a load of 100 g was applied vertically with respect to the end portion of the adhesive side of the samples for measurement at a predetermined temperature to measure heat-resistant creep characteristics (Fig. 1). After 24 hours at each temperature, if the peel length of the adhesive side of the sample for measurement was less than 10 mm, the sample was rated "A," and if the peel length was 10 mm or more, the sample was rated "B."

An SA-302 table type test press from Tester Sangyo Co., Ltd. was used for film formation and adhesion.

Adherend 1: PP board (thickness: 2 mm)
Adherend 2: CPP film (thickness: 80 pm)

Production Example

- Production of Polyolefins a-1 to a-3, b-1 to b-3, and e

Polymerization was performed according to the method described in the present specification. Table 1 below summarizes the melt viscosity and softening point of the polymerized polyolefins a-1 to a-3, b-1 to b-3, and e.

Table 1

| Polyolefin | a-1 | a a-2 | a-3 | b-1 | b b-2 | b-3 | e |
|---|---|---|---|---|---|---|---|
| Melt Viscosity (190°C)/mPa·s | 8000 | 12000 | 15000 | 1000 | 2300 | 9000 | 23000 |
| Softening Point/°C | 90 | 110 | 110 | 160 | 160 | 170 | 120 |

- Production of Various Curable Resin Compositions

Production of Modified Polyolefin C-1

100 parts by mass of a polyolefin mixture of the polyolefin a-1 and the polyolefin b-1 (polyolefin a-1:polyolefin b-1 = 70:30 by mass), 1.5 parts by mass of KBM-503 (3-methacryloxypropyltrimethoxysilane, produced by Shin-Etsu Polymer Co., Ltd.) and 1.5 parts by mass of Perbutyl I (t-butyl peroxy isopropyl monocarbonate, produced by NOF Corporation) were added simultaneously to the feed port of a twin-screw extruder (Technovel Corporation, KZW15TW-45/60 MG-NH (-2200), screw outer diameter: 15 mm, LID = 45). In the twin-screw extruder, the additives were allowed to react with the polyolefin mixture, thereby obtaining a modified polyolefin. The operation conditions of the twin-screw extruder were the following: a barrel temperature of 160°C and an extrusion amount of 1.0 to 1.5 kg/hour. The end portion of the twin-screw extruder was placed in a reduced pressure environment to remove some of the unreacted additives and byproducts.

Modified polyolefins C-2 to C-13 were prepared in the same manner as in the preparation example of the modified polyolefin C-1.

Table 2 summarizes the preparation conditions of the modified polyolefins C-1 to C-13 as Examples 1 to 8 and Comparative Examples 1 to 5 and the results of the various measurements and evaluations described above.

Table 2

| | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|
| Silane-modified Polyolefin | C-1 | C-2 | C-3 | C-4 | C-5 | C-6 | C-7 | C-8 | C-9 | C-10 | C-11 | C-12 | C-13 |
| Polyolefin a | a-1 | a-1 | a-2 | a-2 | a-3 | a-1 | a-1 | a-1+a-2 | a-1 | a-1 | a-1 | a-1 | e |
| Polyolefin b | b-1 | b-2 | b-1 | b-3 | b-1 | b-1 | b-1 | b-1 | b-1 | b-1 | b-1 | b-1 | b-1 |
| Ratio by Mass (a/b) | 7/3 | 7/3 | 7/3 | 7/3 | 7/3 | 5/5 | 9/1 | (3.5 + 3.5)/3 | 7/3 | 4/6 | 10/0 | 0/10 | 8/2 |
| Peroxide | 1.5 | 1.5 | 1.5 | 1.5 | 1.5 | 1.5 | 1.5 | 1.5 | 1.5 | 1.5 | 1.5 | 1.5 | 1.5 |
| Silane-modified Monomer | 1.5 | 1.5 | 1.5 | 1.5 | 1.5 | 1.5 | 1.5 | 1.5 | 0 | 1.5 | 1.5 | 1.5 | 1.5 |
| Evaluation Item — Handling Properties Coating Properties | A | A | B | B | B | A | B | A | A | C | A | C | C |
| Handling Properties Viscosity Stability | A | A | A | B | A | B | A | A | A | C | A | C | C |
| Heat-resistant Creep Characteristics 100°C | B | B | B | B | B | B | B | B | C | C | C | Not Evaluated | Not Evaluated |
| Heat-resistant Creep Characteristics 110°C | B | B | B | B | B | B | B | B | C | C | C | Not Evaluated | Not Evaluated |
| Heat-resistant Creep Characteristics 120°C | C | C | B | B | B | B | C | B | C | C | C | Not Evaluated | Not Evaluated |
| Adhesive Strength Room Temperature | B | B | B | B | B | B | B | B | C | B | B | Not Evaluated | Not Evaluated |
| Adhesive Strength High Temperature | B | B | B | B | B | B | B | B | C | C | C | Not Evaluated | Not Evaluated |

As is clear from Examples 1 to 8 and Comparative Examples 1 to 5, the curable resin composition of the present invention is excellent in handling properties, and adhesive strength and creep characteristics in a high-temperature environment.

The curable resin composition used in the present invention is useful as a starting material for a hot-melt adhesive and can be suitably used as a hot-melt adhesive excellent in handling properties, and adhesive strength and creep characteristics in a high-temperature environment.

**Claims**

1. A curable resin composition, comprising

   a modified polyolefin A and
   a modified polyolefin B,

   wherein

   the modified polyolefin A is a resin in which a moisture-curable functional group is grafted onto a polyolefin a,
   the modified polyolefin B is a resin in which a moisture-curable functional group is grafted onto a polyolefin b,
   the polyolefin a has a softening point of 80°C or higher and lower than 120°C,
   the polyolefin b has a softening point of 120°C or higher and 170°C or lower, and
   the content ratio by mass of the modified polyolefin A and the modified polyolefin B is 50:50 to 95:5 in terms of the former:the latter.

2. The curable resin composition according to claim 1,
   wherein the polyolefin a has a higher melt viscosity at 190°C than a melt viscosity at 190°C of the polyolefin b.

3. The curable resin composition according to claim 1 or 2, wherein the polyolefin a has a melt viscosity at 190°C of 15000 mPa·s or lower.

4. The curable resin composition according to any one of claims 1 to 3, which is for use in a hot-melt adhesive.

5. A hot-melt adhesive comprising the curable resin composition of any one of claims 1 to 4.

Fig. 1

## INTERNATIONAL SEARCH REPORT

| International application No. |
| --- |
| **PCT/JP2022/041292** |

**A.    CLASSIFICATION OF SUBJECT MATTER**

*C08F 8/42*(2006.01)i; *C08L 51/06*(2006.01)i; *C09J 123/26*(2006.01)i; *C09J 151/06*(2006.01)i
FI:    C08F8/42; C08L51/06; C09J123/26; C09J151/06

According to International Patent Classification (IPC) or to both national classification and IPC

**B.    FIELDS SEARCHED**

Minimum documentation searched (classification system followed by classification symbols)

C08F8/42; C08L51/06; C09J123/26; C09J151/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2011-518935 A (SIKA TECHNOLOGY AG) 30 June 2011 (2011-06-30)<br>claims, paragraphs [0015], [0021], [0041], examples | 1-5 |
| A | JP 2004-176028 A (HITACHI KASEI POLYMER CO., LTD.) 24 June 2004 (2004-06-24)<br>entire text | 1-5 |

☐ Further documents are listed in the continuation of Box C.          ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **28 November 2022** | **13 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | International application No.<br>**PCT/JP2022/041292** |
|---|---|

| Patent document<br>cited in search report | Publication date<br>(day/month/year) | Patent family member(s) | Publication date<br>(day/month/year) |
|---|---|---|---|
| JP 2011-518935 A | 30 June 2011 | US 2011/0020634 A1<br>claims, paragraphs [0015],<br>[0021], [0041], examples<br>WO 2009/133093 A1<br>EP 2113545 A1<br>KR 10-2011-0005293 A<br>CN 102015951 A | |
| JP 2004-176028 A | 24 June 2004 | (Family: none) | |

Form PCT/ISA/210 (patent family annex) (January 2015)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000303047 A

- JP 2010059319 A

**Non-patent literature cited in the description**

- **HIROSHI YAMAMOTO ; S. ABBOTT ; C. M. HANSEN.** *Chemical Industry,* March 2010

- **HIROSHI YAMAMOTO ; S. ABBOTT ; C. M. HANSEN.** *Chemical Industry,* April 2010